# EUROPEAN PATENT APPLICATION

(11) **EP 2 388 743 A1**
(43) Date of publication of application: **23.11.2011**
(21) Application number: 11250545.8
(22) Date of filing: 23.05.2011
(51) Int. Cl.: G06Q 10/00

(54) **Confirming last room availability pricing**

(30) Priority: 21.05.2010 US 785356
(71) Applicant: Carlson Wagonlit UK Ltd., Potters Bar, Hertfordshire EN6 5RF (GB)
(72) Inventor: Desy, Daniel, Maple Grove Minnesota 55369 (US); Olson, Shannan Marie, Savage Minnesota 55378 (US); Houlihan, Clare Karen, Westcroft Milton Keynes, MK4 4ET (GB)
(74) Representative: Beresford, Keith Denis Lewis

(57) **Abstract**

Systems and methods for confirming last room availability pricing for accommodations are disclosed. Search results received in response to a search request for hotel or other accommodations are received. The search results include one or more available room rates for a room type. Upon determining that a room type should be priced at a contracted room rate according to a last room availability agreement, the system compares the contracted room rate to the one or more available room rates in the search results. Upon determining that the contracted room rate for the room type is not present in the one or more available room rates and determining that another room rate for the room type is present in the one or more available room rates, the system provides a pricing alert.

## Description

### LIMITED COPYRIGHT WAIVER

A portion of the disclosure of this patent document contains material which is subject to copyright protection. The copyright owner has no objection to the facsimile reproduction by anyone of the patent disclosure, as it appears in the Patent and Trademark Office patent files or records, but otherwise reserves all copyright rights whatsoever. Copyright 2010, Carlson Wagonlit Travel.

### FIELD

Embodiments of the inventive subject matter relate generally hotel reservation systems and more particularly to confirming last room availability pricing in such systems.

### BACKGROUND

Companies spend considerable amounts of money on travel expenses for their employees, clients and customers. One component of these travel expenses are for hotel stays. In order to reduce the amount spent on travel, companies often negotiate reduced rates for rooms at hotels in exchange for designating the hotel as a "preferred" or "required" hotel when an employee is travelling on company business. Various conditions such as room type, blackout dates and other conditions may be part of the negotiated package between the company and the hotel. Often it can be difficult for a company to verify that it has in fact been offered the negotiated contract rate when booking travel. Furthermore, even when a company suspects it has not been given the negotiated contract rate, it can be difficult to prove that the rate should have been provided at the time of booking.

### BRIEF DESCRIPTION OF THE FIGURES

Embodiments of the invention are illustrated by way of example and not limitation in the Figures of the accompanying drawings in which:

**Figure 1** is a block diagram of system architecture according to embodiments of the invention

**Figures 2A** - 2C are flow charts illustrating methods for confirming last room availability pricing according to embodiments of the invention.

**Figures 3A** - 3L are example screen images used in various embodiments of the invention.

**Figure 4** is a block diagram of an example computer system capable of incorporating various embodiments of the invention.

### DESCRIPTION OF THE EMBODIMENTS

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. Furthermore, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

A number of figures show block diagrams of systems and apparatus of embodiments of the invention. A number of figures show flow diagrams illustrating systems and apparatus for such embodiments. The operations of the flow diagrams will be described with references to the systems/apparatuses shown in the block diagrams. However, it should be understood that the operations of the flow diagrams could be performed by embodiments of systems and apparatus other than those discussed with reference to the block diagrams, and embodiments discussed with reference to the systems/apparatus could perform operations different than those discussed with reference to the flow diagrams.

### Overview

The various embodiments of the invention provide the ability to confirm that a traveler is receiving correct room rates according to pre-negotiated contracts. It is common for companies to negotiate various aspects of travel services with travel service providers such as airlines and hotels. As noted above, a company or consortium of companies may negotiate reduced rates for particular room types with a hotel in exchange for a commitment to use the hotel as a preferred provider for rooms. As used herein, "company contracted room rate" refers to such negotiated rates. However, hotels may not be willing to provide the reduced rate when the hotel is full or nearly full because the hotel has the opportunity to charge more when room availability is scarce. In order to ensure reduced pricing on a consistent basis, companies may negotiate a "last room availability" provision. A last room availability provision indicates that travelers associated with the company are to receive the negotiated company contracted room rate whenever the room type is available, even if it is the last room of that type available in the hotel.

Additionally, travel management companies may negotiate reduced room rates with hotels that may then be utilized by any traveler booking hotels through the travel management company. As used herein, a "travel management company" is a company that provides travel booking and other travel management services. For example, Carlson Wagonlit Travel is a travel management company and negotiates reduced room rates for its clients. As used herein, "travel management company room rate" refers to such rates. The rates negotiated by companies may be lower than those obtained by travel management companies in specific cities where the client has concentrated volume.

As used herein, the term "hotel" includes hotels, motels, apartments, inns or any other establishment, chain or business providing rooms or other accommodations for relatively short durations.

As used herein, a module is any grouping of software, hardware, or firmware routines that perform an indicated task.

### Example Operating Environment

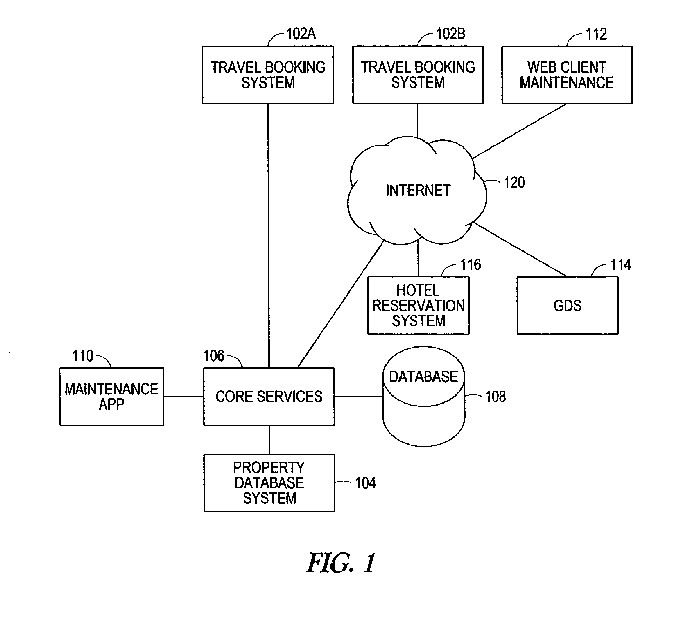

Figure 1 is a block diagram illustrating an architecture for a system 100 according to embodiments of the invention. In some embodiments, system 100 includes travel booking systems 102, property database system 104, core services 106, maintenance application 110, web client maintenance application 112, GDS (Global Distribution System) 114 and hotel reservation system 116. The systems may be communicably coupled via private networks or via a public network 120 such as the Internet.

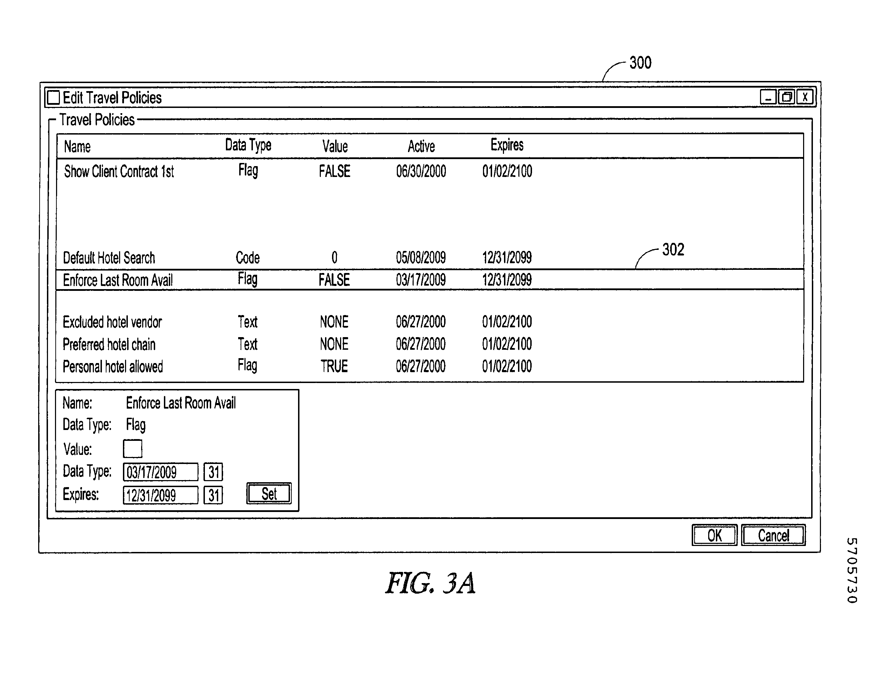

Travel booking systems 102 provide a user interface that allows a user to book one or more travel services such as air, hotel, rental car and other travel related services. The travel booking system may be designed to be used by a travel counselor or agent on behalf of a traveler (e.g., travel booking system 102A) or by the traveler themselves (e.g., travel booking system 102B). The travel booking system may be provided by a travel management company. Examples of such travel booking systems include the Horizon and Harmony systems provided by Carlson Wagonlit Travel. Examples of a user interface provided by a travel booking system are provided with reference to Figures 3A - 3L.

Property database system 104 maintains a database of property information regarding various hotels. Such information may include property location, room rate information, room type information and various other attributes of hotels. Additionally, information about programs available for a company or consortium of companies may be maintained by property database system 104. Such information may include contract provisions such as negotiated room rates (e.g., company contracted room rates or travel management company room rates), rate expiration dates, blackout dates, an indication that last room availability pricing applies to a rate, and whether last room availability pricing is to be enforced.

Maintenance application 110 provides an interface that may be used by a travel management company to create and maintain information in property database 104. For example, the maintenance application 110 may be used to set up client (i.e., company or consortium) data and to enter information into property database system 104.

Web client maintenance application 112 provides an interface for a client of a travel management company to create and maintain information in property database system 104. The information that a client can create or update may be more limited than the information that can be created and updated by maintenance application 110.

GDS 114 is a travel services reservation system, also referred to as a computerized reservation system. GDS 114 maintains inventory of available travel services and tracks bookings and reservations against the available inventory. Examples of such systems include Sabre, Galileo (also known as Apollo), Amadeus, and Worldspan. Hotel reservation system 116 is a computerized reservation system that is proprietary to a particular hotel operator or consortium of hotel operators. The hotel reservation system may communicate with GDS 114 so that the hotel reservation system and the GDS reflect the same information regarding room availability and rates.

Core services 106 provides a common set of services and interfaces for accessing property database system 104 and database 108. Core services module 106 may be used by travel booking systems 102, maintenance application 110 and web client maintenance application 112 to create, read, update and delete information and data records in property database system 104 and database 108. Database 108 may be used to store travel booking information for travelers. Data records, also referred to as segments, may be stored in database 108 that represent bookings (either confirmed or held) for air travel, hotel reservations, rental car reservations etc. The data records in database 108 may be used by travel management company systems and users. Similar records may be created in GDS 114.

The components and modules of system 100 described above represent those components and modules of an example embodiment. It should be noted that the inventive subject matter may be implemented using more or fewer components or modules, and that the functionality may be distributed in different components.

Further, the components or modules may execute in whole or in part on server computers, personal computers, mainframe computers, mobile (cellular) phones, personal digital assistants, set-top boxes, web appliances or any other machine capable of executing a set of instructions that specify a set of actions to be taken by the machine.

### Example Operations

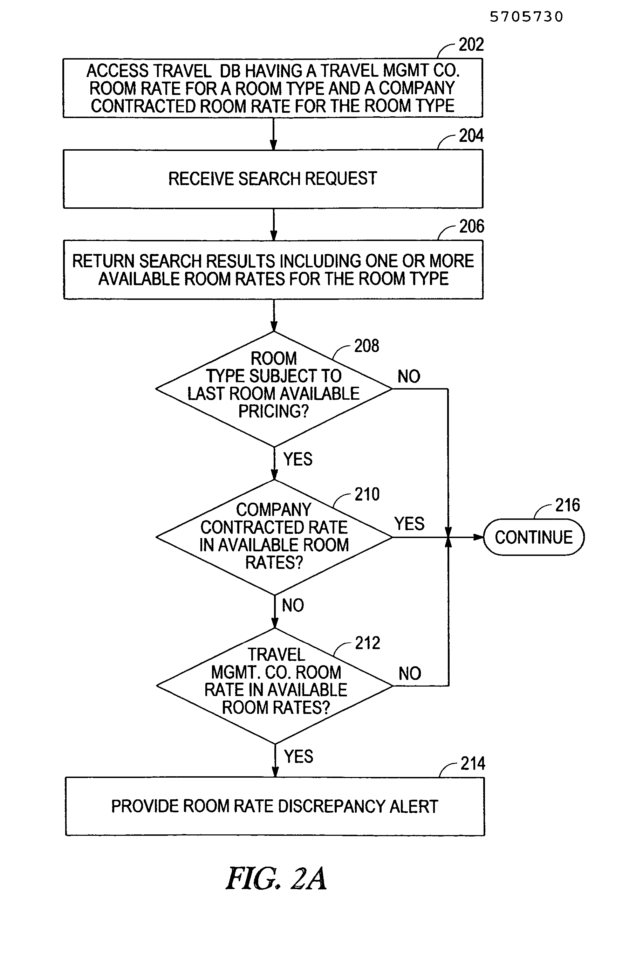

Figures 2A - 2C are flow charts illustrating methods according to embodiments of the invention. The methods to be performed may utilize computer programs or modules made up of computer-executable instructions. Describing the methods by reference to a flowchart enables one of ordinary skill in the art to develop such programs including instructions to carry out the method on suitable processors (the processor or processors of the computer executing the instructions from computer-readable media). The methods illustrated in Figures 2A-2C include acts that may be taken by an operating environment such as system 100 executing any embodiment of the invention.

Figure 2A is a flow chart illustrating a method 200 for confirming last room availability pricing according to embodiments of the invention. The method begins at block 202 with maintaining one or more databases having travel related information. The travel related information may include various data useful in providing and/or booking travel services for a customer. As discussed above, in some embodiments, the travel related information includes a travel management company room rate, a company contracted room rate, and for at least some companies, an indicator of whether last room availability pricing applies to the room rate.

At block 204, the system receives a search request for a room. The search request may include various parameters such as a company name or identifier to identify the company the traveler is associated with , desired geographic location, arrival date, length of stay or departure date etc.

At block 206, the system returns search results. The search results include those hotels having rooms available that match the search parameters. The results may include the room type and various room rates available. Multiple rates may be provided, for example, a standard rate (i.e., non-discounted rate), a travel management company room rate, a company contracted room rate, and promotional room rates (i.e., discounted room rates available to anyone).

At block 208, the system checks to determine if any of the available rooms have room types that are subject to last room availability pricing for the company. If not, the method proceeds to block 216 to continue with a normal booking process.

If at least one room type is subject to last room availability pricing, then the system proceeds to block 210 to determine if the company contracted rate is provided for any of the available rooms having the room type. If yes, the method proceeds to block 216 to continue with a normal booking process.

If the company contracted rate is not provided, then at block 212 the system determines if a travel management company rate has been provided in the search results for available rooms having the room type. If a travel management company rate does not appear in the search results, then the system proceeds to block 216 to continue with a normal booking process.

In some embodiments of the invention, the system checks to determine if the desired reservation date occurs within a blackout date, where the last room pricing agreement would not apply. If such a blackout date is applicable, the system continues with a normal booking process.

If a travel management company room rate is provided in the search results, then at block 214, the system provides a room discrepancy alert. In some embodiments, the room discrepancy alert includes a message provided on a display of search results indicating that last room availability pricing was applicable to at least one room type in the search results and that the company contracted rate was not provided. The fact that travel management company room rate was included in the search results confirms that the room type was in fact available.

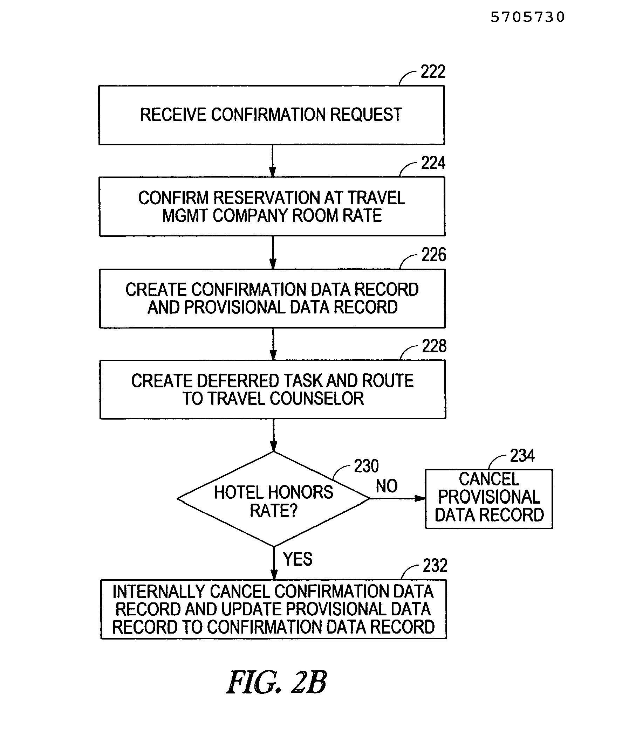

Figure 2B is a flowchart illustrating a method 220 for obtaining last room availability pricing according to embodiments of the invention. In some embodiments, method 220 proceeds after block 214 of method 200.

At block 222, the system receives a request to confirm a room reservation at the travel management company room rate. At block 224, the system confirms the travel management company room rate, for example, by issuing a room reservation request to a GDS or hotel reservation system.

At block 226, in some embodiments the system creates two data records (also referred to as "segments"). The system creates a confirmation data record that includes the room details, including the travel management company room rate. In addition, a provisional data record is created that includes the room details along with the company contracted rate. The record is referred to as a "provisional" record in that it is not the confirmed rate. A travel counselor may use the information in the provisional record when contacting a hotel to obtain the room rate in the provisional record.

At block 228, the system creates a deferred task and routes the deferred task to a travel counselor for further processing. The task is referred to as a "deferred task" in that activities associated with the task take place after the room has been reserved at the travel management company rate. In some embodiments, the task is deferred for 30 -120 minutes. In addition, the deferred task may be assigned a skill level or attribute such that it will be routed to travel counselors indicated in the system as having the requisite skill level or attribute. The deferred task may be maintained in the travel booking system. However, in some embodiments, the deferred task may be sent to a GDS queue for use by a travel counselor.

Upon receiving the deferred task, the travel counselor typically contacts the hotel in order to obtain the company contracted rate. For example, the travel counselor may contact the hotel by phone to speak with hotel personnel to determine why the company contracted rate was not provided and to present evidence (e.g., the availability of the room type at the travel management company rate) that the contracted room type was in fact available and should have been provided.

At block 230, the system receives indication of whether or not the hotel will honor the company contracted rate. For example, the travel counselor may perform actions through a system user interface to indicate whether or not the company contracted rate will be honored. If the rate will be honored, then at block 232, the system cancels the confirmation data record. In some embodiments, the cancellation is a "local" cancellation, that is, the cancelation is not sent to a GDS or hotel reservation system on basis that the hotel or GDS reservation has been updated by the hotel themselves to reflect the company contracted rate. The system also updates the provisional record in the travel management company's system such that it is now a confirmation record. In some embodiments, the provisional record is updated to indicate that the rate was confirmed manually.

At block 234, if the hotel does not honor the company contracted rate, then the provisional data record is canceled. A report or message may be generated to indicate that the hotel refused to honor the company contracted rate.

It should be noted that alternative methods of contacting the hotel may be used. For example, an automated message may be sent to the hotel reservation system and a response may be received indicating whether or not the hotel will honor the company contracted rate.

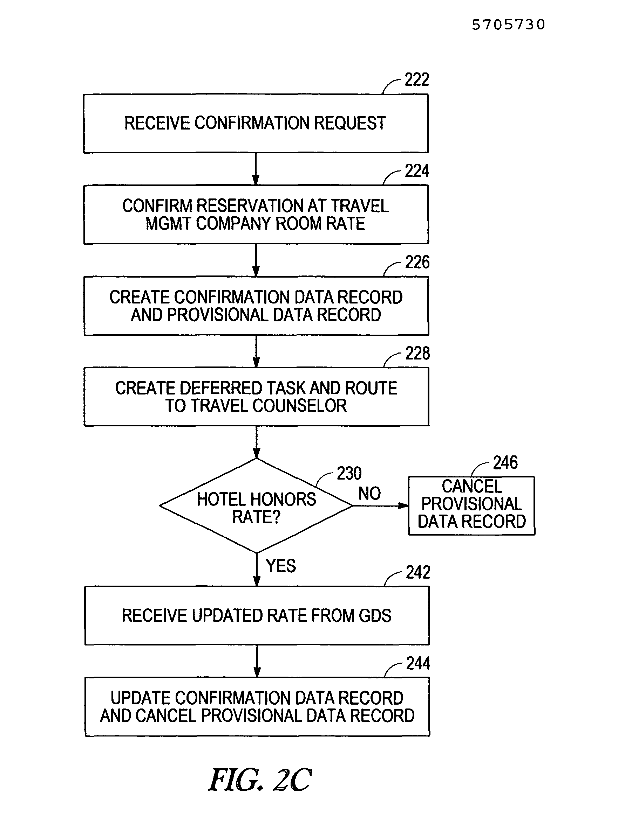

Figure 2C is a flowchart illustrating a method 240 for obtaining last room availability pricing according to alternative embodiments of the invention. Blocks 222 to block 230 function in the same manner as described above for method 220.

At block 242, if the hotel honors the company contracted rate, the hotel may update their proprietary hotel reservation system, which may then cause the GDS to be updated with the new rate (e.g., the company contracted rate). The system may receive this updated rate from the GDS. At block 244, the system then cancels the original confirmation data record and updates the provisional data record to be the confirmation record. Alternatively, the system may update the original confirmation data record and cancel the provisional data record.

In the methods discussed above, a comparison of rates for available room types with a company contracted rate has been used to determine if a room type subject to a last room availability pricing agreement is in fact available, but not presented. Other methodologies may be used to determine if such a room type is in fact available. For example, a GDS may be queried to determine if a room type subject to a last room availability agreement is in fact available. In such alternative embodiments, a travel booking system may confirm last room availability at a contracted rate by receiving a search request. In response to the search request, a set of search results may be received. Upon determining that the contracted room rate does not appear in the search results, that a last room pricing agreement for the contracted room rate exists, and that a room type subject to the last room pricing agreement is available, the travel booking system provides a room rate discrepancy alert.

Figures 3A-3L are example screen images of various user interfaces that may be used during the execution of the methods described above in Figures 2A - 2C. The example screen images are representative of particular embodiments, other embodiments may use different interfaces. The inventive subject matter is not limited to that represented in Figures 3A - 3L.

Figure 3A is a screen image 300 illustrating an example user interface for maintaining data in property database system 104. Screen image 300 includes various parameters regarding a travel policy implemented for a particular company or consortium of companies and/or for particular travelers within a company or consortium. As shown, the travel policy may include an "enforce last room availability" value 302 that determines whether last room availability pricing may exist and be enforced for a company.

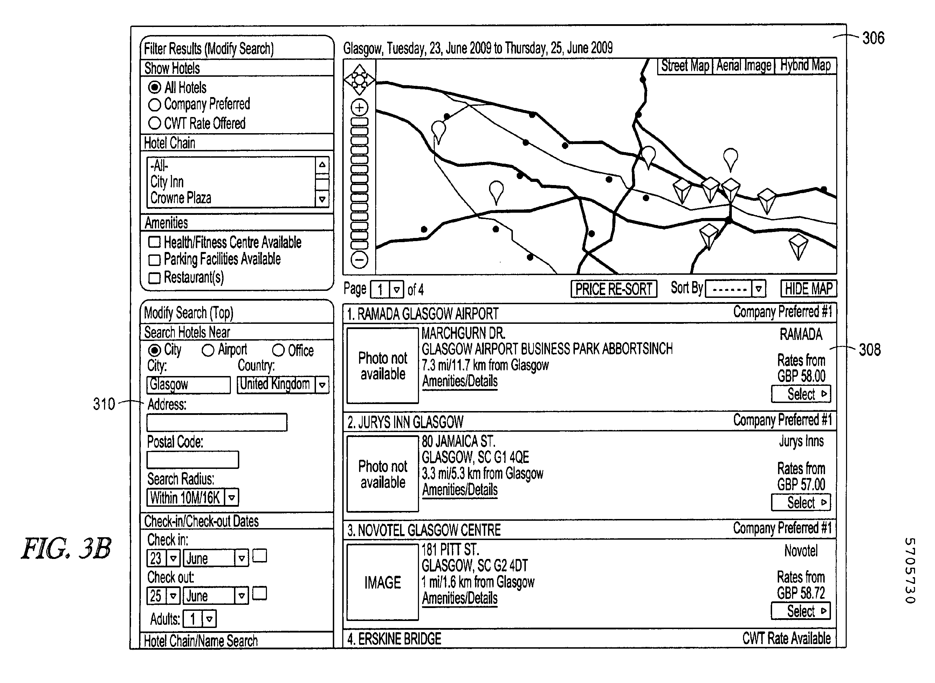

Figure 3B is a screen image 306 illustrating an example search results screen. The search results include hotels that matched search parameters 310. The information in the search results includes a "rates from" value 308 that shows the lowest rate that may be available at each hotel in the list. In some embodiments, the "rates from" value may reflect last room availability pricing.

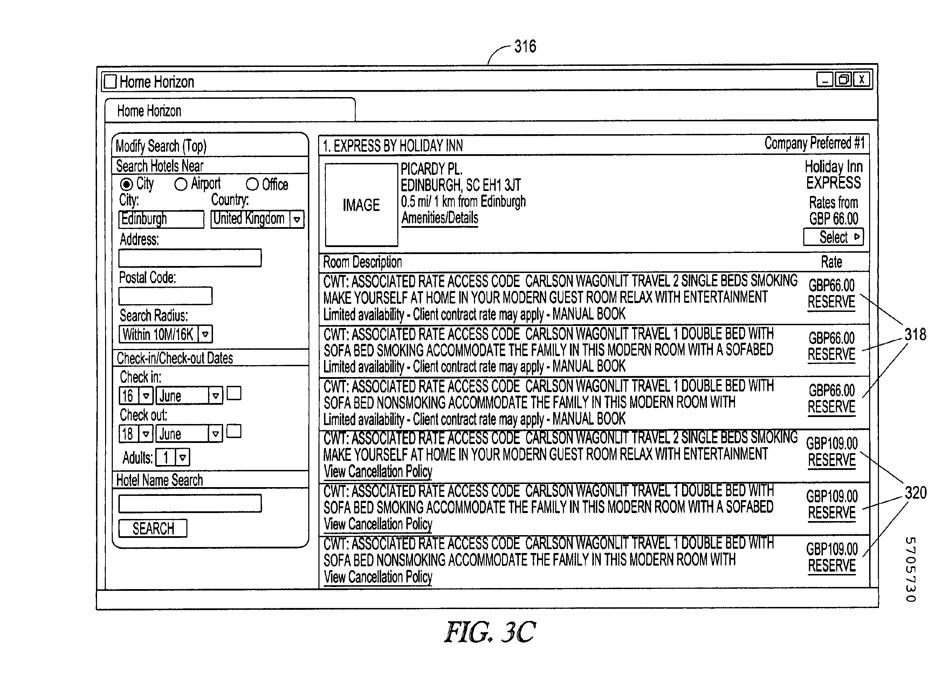

Figure 3C is a screen image 314 for a selected hotel within the search results. Various room type/room rate combinations are provided. Available room listings 320 are provided along with their associated room rates. There may be multiple room descriptions and rates listed if multiple room types are available at the same rate. This allows the traveler to select smoking/non-smoking, bed type, and other considerations for the booked segment. Additionally, company contracted room type and room rate combinations 316 are also provided. In this example, the company contracted room type/room rates were not included in the search results, so the system added entries and provided an alert message 318 indicating that the company contracted rates were missing from the search results.

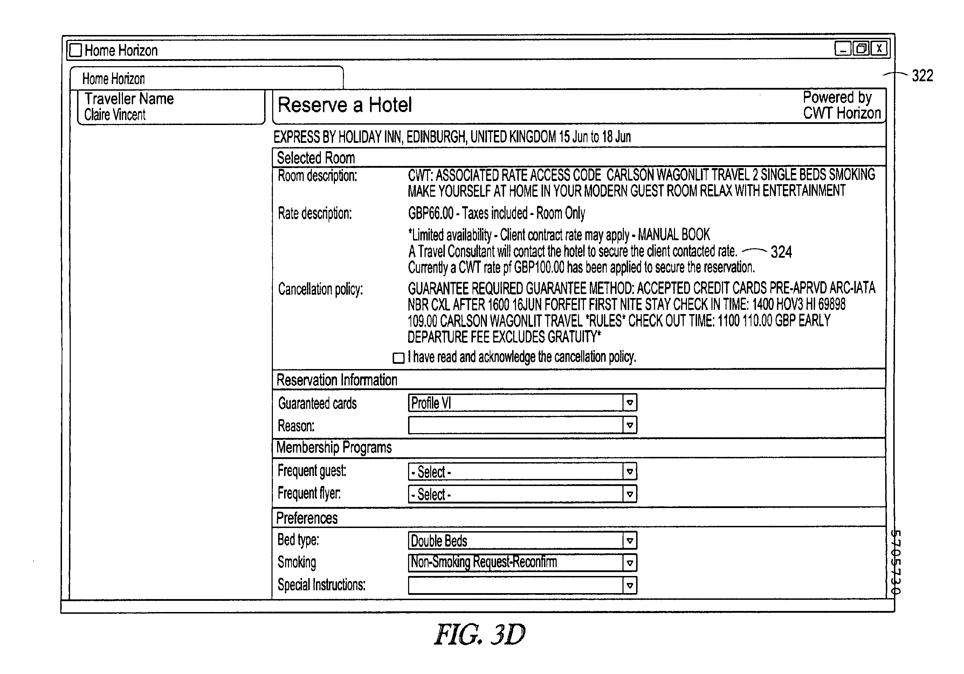

Figure 3D is a screen image 322 of an example reservation screen. Upon selecting a room type/rate listed in the search results, the reservation screen may be presented to allow a user to input further information such as payment details, loyalty program information etc. An alert 324 is presented to the user indicating that the last room availability pricing was not provided, and that a travel counselor will attempt to obtain the last room availability pricing.

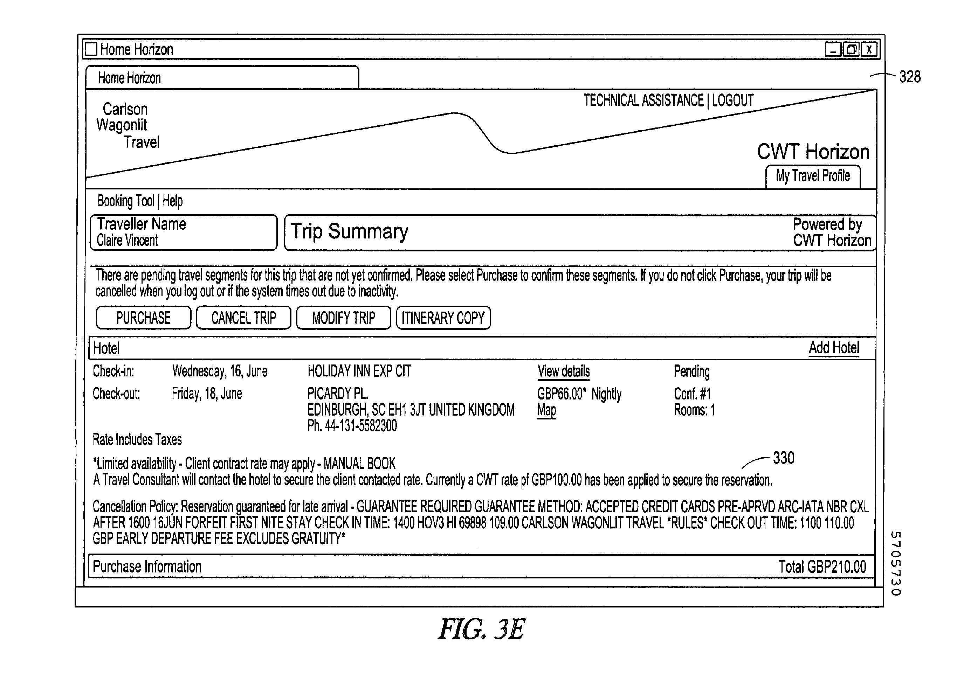

Figure 3E is a screen image 328 of an example trip summary screen. The example trip summary screen provides summary information to the traveler prior to confirming the reservation. The summary information includes an alert 330 that a company contracted room rate was applicable, but not yet confirmed.

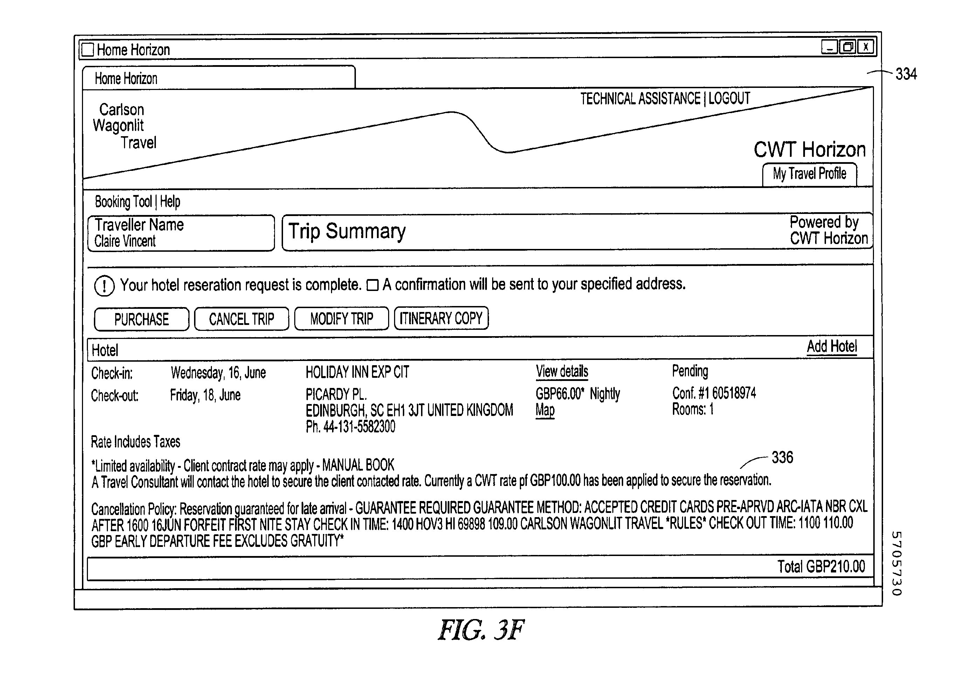

Figure 3F is a screen image 334 of an example purchase summary screen. The example purchase summary screen is presented after the user has purchased the room. The example purchase summary screen includes an alert 336 indicating that the company contracted room rate was applicable, but not yet confirmed.

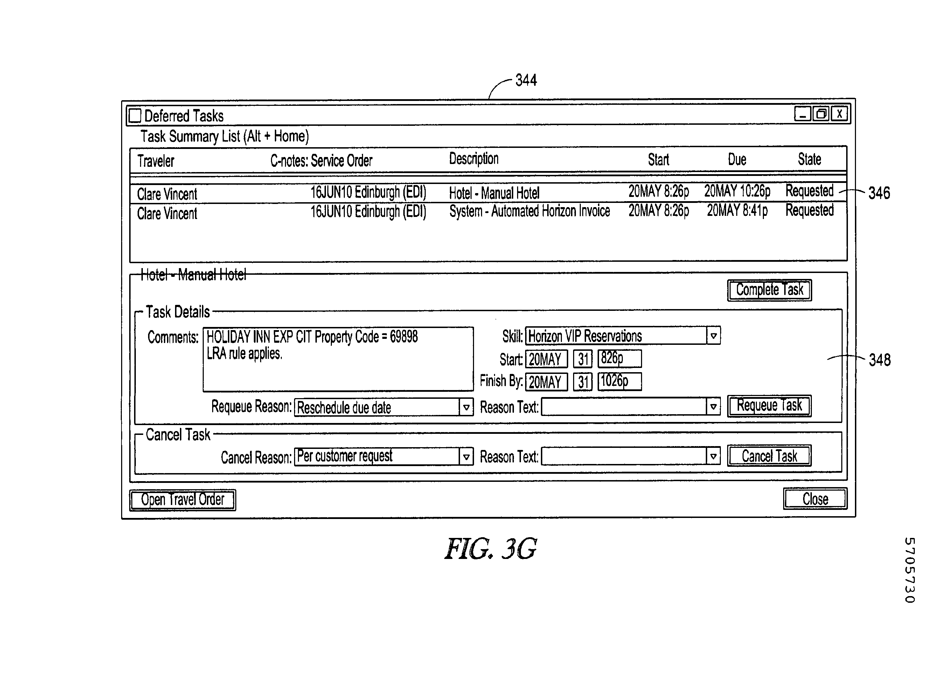

Figure 3G is a screen image 344 of a deferred task interface. The deferred task interface includes a list of one or more deferred tasks 346, and an information area 348 that provides information about a selected deferred task. The information may include information about the nature of the deferred task, the time the task may start, and the time the task must be completed.

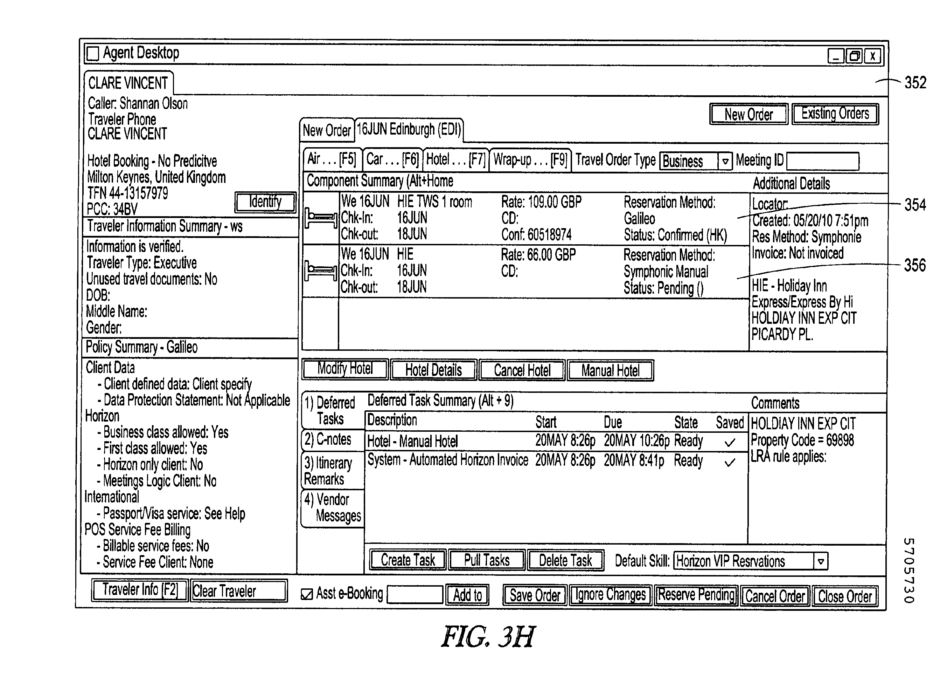

Figure 3H is a screen image 352 of a component summary interface. The component summary interface includes data for the confirmed data record 354 indicating the confirmed room rate and for the provisional data record 356 indicating the contracted rate.

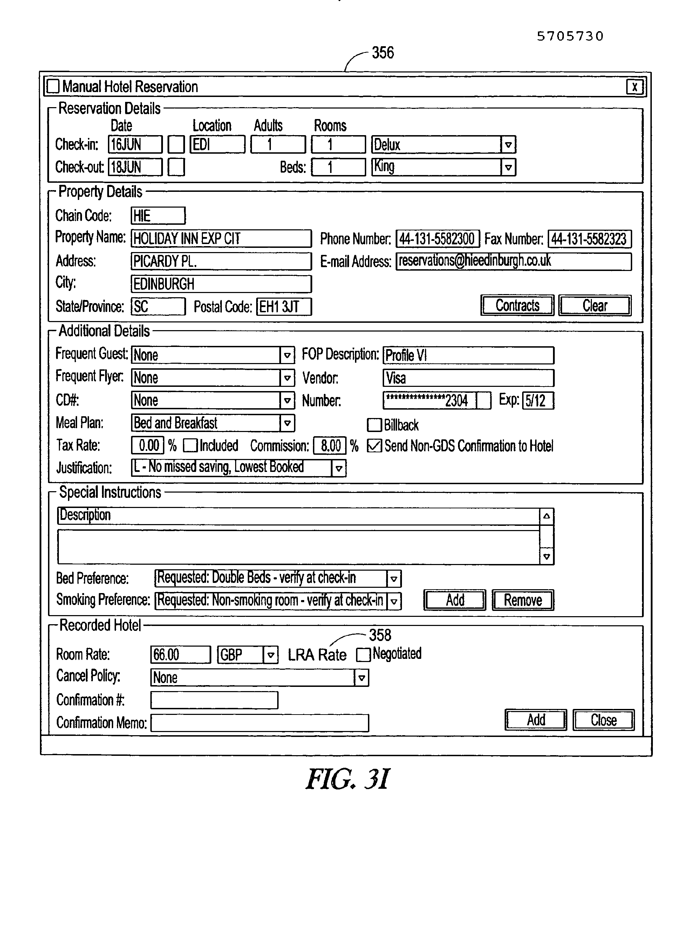

Figure 3I is a screen image 356 of a manual hotel reservation screen. The manual hotel reservation screen may be used by a travel counselor to "manually" book a room, that is, when a travel counselor calls a hotel representative to obtain a contracted rate. As shown in the example, an alert 358 is provided indicating the company contracted rate is applicable according to a last room availability agreement.

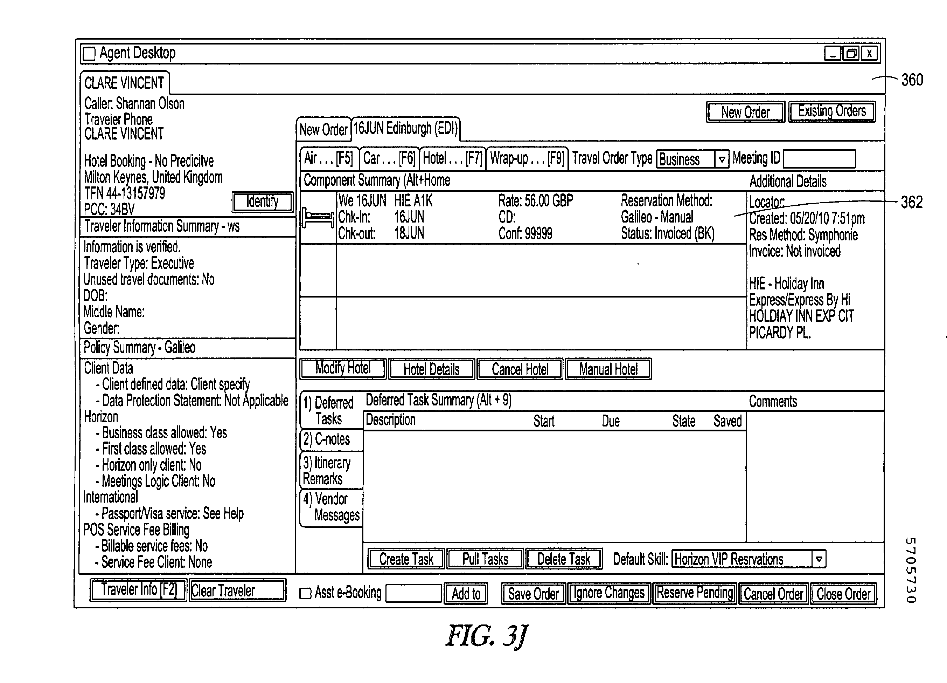

Figure 3J is a screen image 360 showing a component summary interface that has been updated to reflect that the company contracted rate has been obtained. The data record 362 comprises the former provisional data record 356 (Figure 3H), which has now been confirmed with the company contracted rate.

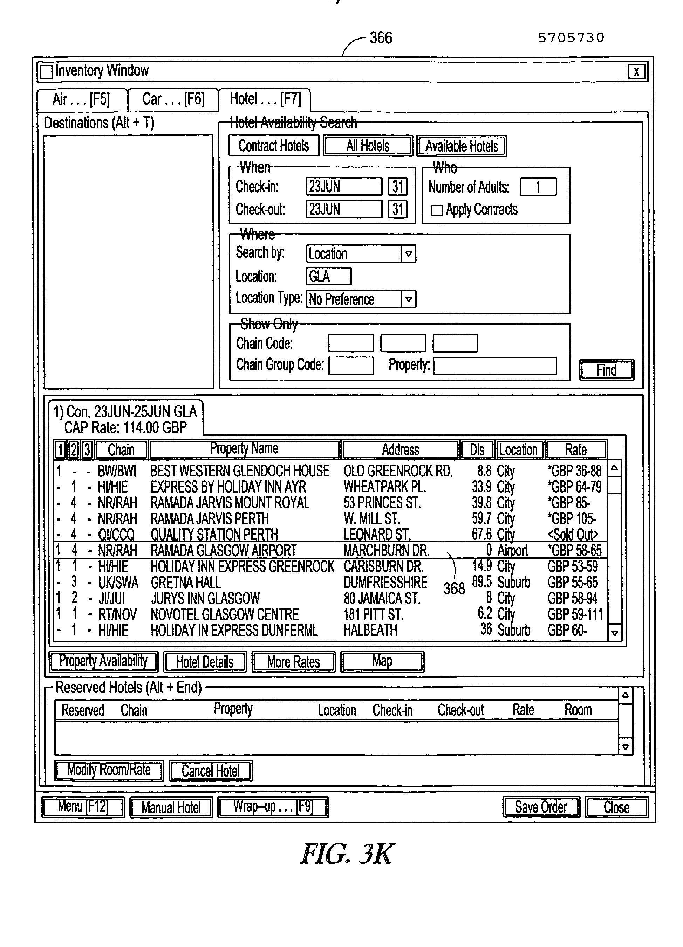

Figure 3K is a screen image 366 of an inventory window of a travel booking system according to alternative embodiments of the invention. The inventory window provides a list 368 of hotels as a result of a search request. The pricing indicated in the list may include company contracted rates. As shown in the example, one of the entries is highlighted to indicate that it is selected.

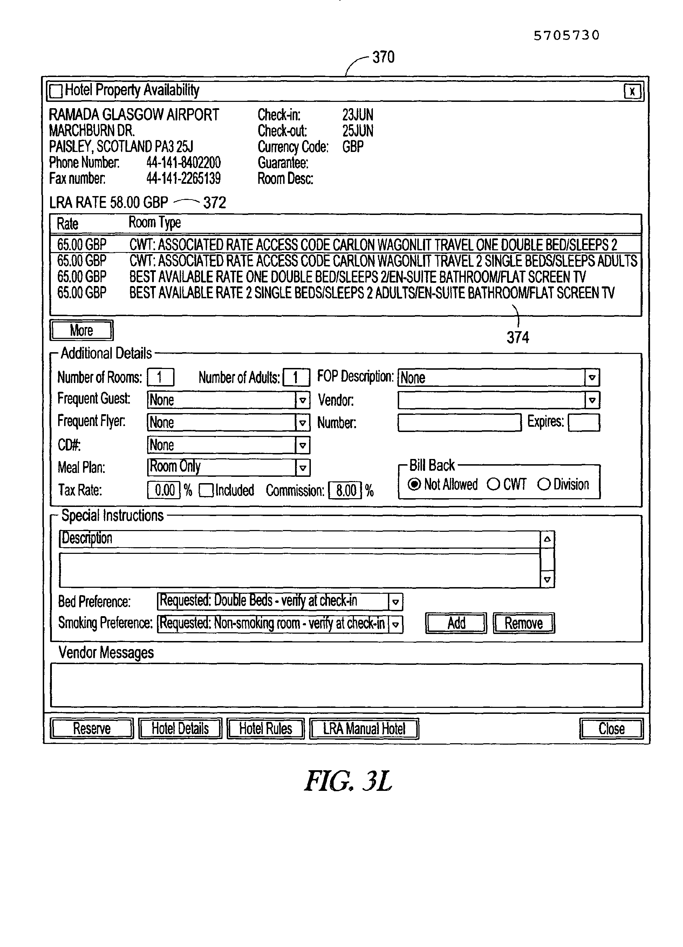

Figure 3L is a screen image 370 of a hotel property availability screen. The hotel property availability screen provides information about a selected hotel, including a list 374 of what the hotel has indicated to be available room type/room rate combinations. An alert 372 is provided on the screen to indicate that the company contracted rate is not included in list 374.

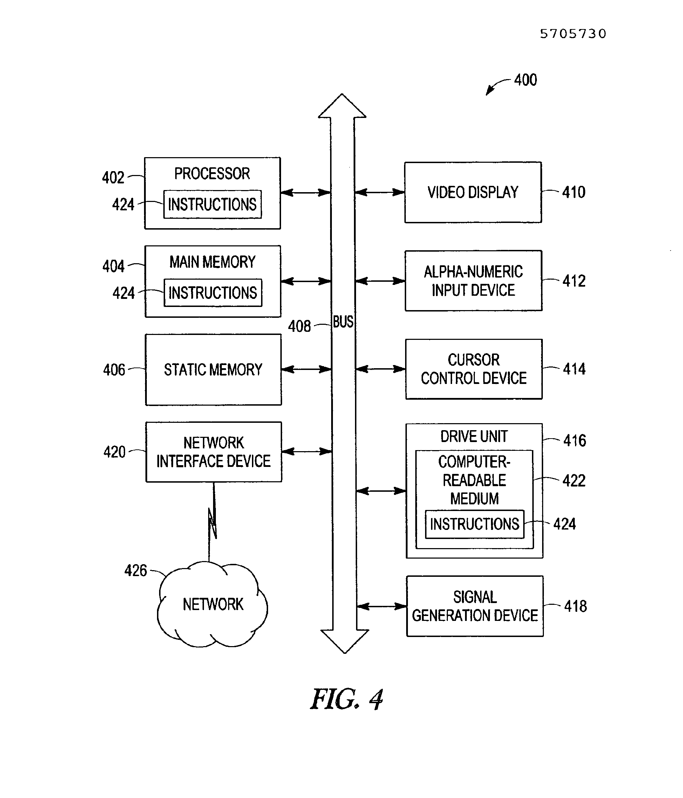

Figure 4 is a block diagram of an example embodiment of a computer system 400 upon which embodiments inventive subject matter can execute. The description of Figure 4 is intended to provide a brief, general description of suitable computer hardware and a suitable computing environment in conjunction with which the invention may be implemented. In some embodiments, the invention is described in the general context of computer-executable instructions, such as program modules, being executed by a computer. Generally, program modules include routines, programs, objects, components, data structures, etc., that perform particular tasks or implement particular abstract data types.

As noted above, the system as disclosed herein can be spread across many physical hosts. Therefore, many systems and sub-systems of Figure 4 can be involved in implementing the inventive subject matter disclosed herein.

Moreover, those skilled in the art will appreciate that the invention may be practiced with other computer system configurations, including handheld devices, multiprocessor systems, microprocessor-based or programmable consumer electronics, network PCS, minicomputers, mainframe computers, and the like. The invention may also be practiced in distributed computer environments where tasks are performed by I/ 0 remote processing devices that are linked through a communications network. In a distributed computing environment, program modules may be located in both local and remote memory storage devices.

In the embodiment shown in Figure 4, a hardware and operating environment is provided that is applicable to both servers and/or remote clients.

With reference to Figure 4, an example embodiment extends to a machine in the example form of a computer system 400 within which instructions for causing the machine to perform any one or more of the methodologies discussed herein may be executed. In alternative example embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. Further, while only a single machine is illustrated, the term "machine" shall also be taken to include any collection of machines that individually or jointly execute a set (or multiple sets) of instructions to perform any one or more of the methodologies discussed herein.

The example computer system 400 may include a processor 402 (e.g., a central processing unit (CPU), a graphics processing unit (GPU) or both), a main memory 404 and a static memory 406, which communicate with each other via a bus 408. The computer system 400 may further include a video display unit 410 (e.g., a liquid crystal display (LCD) or a cathode ray tube (CRT)). In example embodiments, the computer system 400 also includes one or more of an alpha-numeric input device 412 (e.g., a keyboard), a user interface (UI) navigation device or cursor control device 414 (e.g., a mouse), a disk drive unit 416, a signal generation device 418 (e.g., a speaker), and a network interface device 420.

The disk drive unit 416 includes a machine-readable medium 422 on which is stored one or more sets of instructions 424 and data structures (e.g., software instructions) embodying or used by any one or more of the methodologies or functions described herein. The instructions 424 may also reside, completely or at least partially, within the main memory 404 or within the processor 402 during execution thereof by the computer system 400, the main memory 404 and the processor 402 also constituting machine-readable media.

While the machine-readable medium 422 is shown in an example embodiment to be a single medium, the term "machine-readable medium" may include a single medium or multiple media (e.g., a centralized or distributed database, or associated caches and servers) that store the one or more instructions. The term "machine-readable medium" shall also be taken to include any tangible medium that is capable of storing, encoding, or carrying instructions for execution by the machine and that cause the machine to perform any one or more of the methodologies of embodiments of the present invention, or that is capable of storing, encoding, or carrying data structures used by or associated with such instructions. The term "machine-readable medium" shall accordingly be taken to include, but not be limited to, solid-state memories and optical and magnetic media that can store information in a non-transitory manner, i.e., media that is able to store information for a period of time, however brief. Specific examples of machine-readable media include non-volatile memory, including by way of example semiconductor memory devices (e.g., Erasable Programmable Read-Only Memory (EPROM), Electrically Erasable Programmable Read-Only Memory (EEPROM), and flash memory devices); magnetic disks such as internal hard disks and removable disks; magneto-optical disks; and CD-ROM and DVD-ROM disks.

The instructions 424 may further be transmitted or received over a communications network 426 using a transmission medium via the network interface device 420 and utilizing any one of a number of well-known transfer protocols (e.g., FTP, HTTP). Examples of communication networks include a local area network (LAN), a wide area network (WAN), the Internet, mobile telephone networks, Plain Old Telephone (POTS) networks, and wireless data networks (e.g., WiFi and WiMax networks). The term "transmission medium" shall be taken to include any intangible medium that is capable of storing, encoding, or carrying instructions for execution by the machine, and includes digital or analog communications signals or other intangible medium to facilitate communication of such software.

### General

In this detailed description, reference is made to specific examples by way of drawings and illustrations. These examples are described in sufficient detail to enable those skilled in the art to practice the inventive subject matter, and serve to illustrate how the inventive subject matter can be applied to various purposes or embodiments. Other embodiments are included within the inventive subject matter, as logical, mechanical, electrical, and other changes can be made to the example embodiments described herein. Features or limitations of various embodiments described herein, however essential to the example embodiments in which they are incorporated, do not limit the inventive subject matter as a whole, and any reference to the invention, its elements, operation, and application are not limiting as a whole, but serve only to define these example embodiments. This detailed description does not, therefore, limit embodiments of the invention, which are defined only by the appended claims.

Although an overview of the inventive subject matter has been described with reference to specific example embodiments, various modifications and changes may be made to these embodiments without departing from the broader spirit and scope of embodiments of the present invention. Such embodiments of the inventive subject matter may be referred to herein, individually or collectively, by the term "invention" merely for convenience and without intending to voluntarily limit the scope of this application to any single invention or inventive concept if more than one is, in fact, disclosed.

The Abstract is provided to comply with 37 C.F.R. §1.72(b) to allow the reader to quickly ascertain the nature and gist of the technical disclosure. The Abstract is submitted with the understanding that it will not be used to limit the scope of the claims.

## Claims

1. A method for execution by one or more processors to confirm last room availability pricing, the method comprising:
receiving a search request;
in response to the search request, returning search results including one or more available room rates for a room type; and
upon determining that the room type is subject to a last room availability agreement, performing operations including:
comparing by a processor a contracted room rate to the one or more available room rates, and
upon determining that the contracted room rate for the room type is not present in the one or more available room rates and determining that a first room rate for the room type is present in the one or more available room rates, providing a room rate discrepancy alert.

2. The method of claim 1, wherein providing a room rate discrepancy alert includes creating a confirmation task and routing the confirmation task to a travel counselor in accordance with a skill attribute of the travel counselor.

3. The method of claim 1, and further comprising:
confirming a reservation for a room at the first room rate for the room type; and
creating a first data record indicating the confirmation of the reservation at the first room rate.

4. The method of claim 3, and further comprising creating a second data record indicating the contracted room rate for the room type.

5. The method of claim 4, and further comprising:
receiving data indicating the contracted room rate is to be honored;
canceling the first data record indicating the confirmation of the reservation at the first room rate; and
activating the second data record indicating the contracted room rate for the room type.

6. The method of claim 1, wherein determining that the room type is subject to a last room availability agreement includes applying one or more blackout dates.

7. A system comprising:
one or more databases having information regarding a plurality of properties, the information including room rate, room type, last room availability agreement and room availability; and
a travel booking system configured to:
receive a search request,
cause a search of the one or more databases,
receive search results including one or more available room rates for a room type,
determine that the room type is subject to the last room availability agreement,
compare a contracted room rate to the one or more available room rates, and
determine that the contracted room rate for the room type is not present in the one or more available room rates and determine that the a first room rate for the room type is present in the one or more available room rates, and
provide a room rate discrepancy alert.

8. The system of claim 7, wherein the room rate discrepancy alert comprises an alert on a user interface of a travel booking system.

9. The system of claim 7, wherein the travel booking system is further configured to:
confirm a reservation for a room at the first room rate for the room type; and
create a first data record in the one or more databases indicating the confirmation of the reservation at the first room rate.

10. The system of claim 9, wherein the travel booking system is further configured to create a second data record indicating the contracted room rate for the room type.

11. The system of claim 10, wherein the travel booking system is further configured to:
receive data indicating the contracted room rate is to be honored;
cancel the first data record indicating the confirmation of the reservation at the first room rate; and
activate the second data record indicating the contracted room rate for the room type.

12. A non-transitory computer-readable medium having stored thereon instructions for causing one or more processors to perform operations to confirm last room availability pricing, the operations comprising:
receiving a search request;
in response to the search request, returning search results including one or more available room rates for a room type; and
upon determining that the room type is subject to a last room availability agreement, performing operations including:
comparing by a processor a contracted room rate to the one or more available room rates, and
upon determining that the contracted room rate for the room type is not present in the one or more available room rates and determining that a first room rate for the room type is present in the one or more available room rates, providing a room rate discrepancy alert.

13. The non-transitory computer-readable medium of claim 12, wherein the operations further comprise:
confirming a reservation for a room at the first room rate for the room type; and
creating a first data record indicating the confirmation of the reservation at the first room rate.

14. The non-transitory computer-readable medium of claim 13, wherein the operations further comprise creating a second data record indicating the contracted room rate for the room type.

15. The non-transitory computer-readable medium of claim 14, wherein the operations further comprise:
receiving data indicating the contracted room rate is to be honored;
canceling the first data record indicating the confirmation of the reservation at the first room rate; and
activating the second data record indicating the contracted room rate for the room type.
